# EUROPEAN PATENT APPLICATION

(11) **EP 4 799 491 A1**
(43) Date of publication of application: **02.09.2026**
(21) Application number: 25160295.9
(22) Date of filing: 26.02.2025
(51) Int. Cl.: A23P 30/00, A23J 3/26, A23P 30/20

(54) **METHOD OF MANUFACTURING A FOOD PRODUCT AND A DEVICE AND ARRANGEMENT THEREFOR**

(71) Applicant: Nederlandse Organisatie voor toegepast- natuurwetenschappelijk onderzoek TNO, 2595 DA 's-Gravenhage (NL)
(72) Inventor: HOPPENBROUWERS, Marcus Benedictus, 2595 DA 's-Gravenhage (NL); VAN BOMMEL, Kjeld Jacobus Cornelis, 2595 DA 's-Gravenhage (NL); KLOMP, Dolf Jaap, 2595 DA 's-Gravenhage (NL); AULBERS, Antonius Paulus, 2595 DA 's-Gravenhage (NL)
(74) Representative: V.O.

(57) **Abstract**

The present document relates to a method of manufacturing a food product using a marbling device (2), the marbling device and an arrangement comprising the marbling device, wherein the marbling device comprises an inlet (3) at an inlet section (4), an outlet (5) at an outlet section (6), and a conduit (7) running between the inlet and the outlet. The method comprises: providing a food substance (8) to the inlet; forcing the food substance through the conduit such as to provide a stream of the food product at an outlet of the conduit. During the forcing of the protein substance through the conduit, the method comprises feeding a fat-like substance into one or more further inlets (11) of the conduit for being combined with the food substance for yielding a marbling in the stream of the food product. For feeding the fat-like substance, the method comprises controlling a flow rate of the fat-like substance in the one or more further inlets, such that the marbling in the stream of the food product varies along a direction of the stream.

## Description

### Field of the invention

The present invention is directed at a method of manufacturing a food product, the method comprising: providing a food substance to an inlet of a conduit of a marbling device, the inlet being positioned at an inlet section of the marbling device; forcing the food substance through the conduit of the marbling device to an outlet of the conduit, such as to provide a stream of the food product at an outlet of the conduit, the outlet being positioned at an outlet section of the marbling device; wherein during the pushing of the protein substance through the conduit, the method comprises feeding a fat-like substance into one or more further inlets of the conduit for being combined with the food substance for yielding a marbling in the stream of the food product. The invention is further directed at a marbling device and at an arrangement for manufacturing of the food product.

### Background

The production of animal-based food product substitutes is a growing segment of the food industry. Driven by the need for sustainable solutions, consumers report a willingness to try plant-based alternatives to animal-based food products such as animal-based food product substitutes. A number of methods of manufacturing these are known and applied in industry. However, for animal-based food product substitutes to be accepted at large scales, there is a need to develop a means of producing animal-based food product substitutes that appear to be real animal-based food products. This remains a challenge in known methods of manufacturing animal-based food product substitutes, such as single or double screw extruders.

One aspect of this problem is even more pronounced for mass-produced animal-based food product substitutes. Mass-production provides a high degree of consistency in the animal-based food product substitutes, which is generally desirable, but a high degree of uniformity across products also makes the products less appealing.

### Summary of the invention

It is an object of the present invention to provide a method of manufacturing a food product, a marbling device, and an arrangement that overcome the abovementioned drawbacks, and which enable mass-production of food products, in particular animal-based food product substitutes, which appear highly natural.

To this end, there is provided herewith a method of manufacturing a food product using a marbling device, wherein the marbling device comprises an inlet at an inlet section of the marbling device, an outlet at an outlet section of the marbling device, and a conduit running between the inlet and the outlet, the method comprising: providing a food substance to the inlet; forcing the food substance through the conduit, such as to provide a stream of the food product at an outlet of the conduit; wherein during the forcing of the protein substance through the conduit, the method comprises feeding a fat-like substance into one or more further inlets of the conduit for being combined with the food substance for yielding a marbling in the stream of the food product, wherein for feeding the fat-like substance into the one or more further inlets, the method comprises controlling a flow rate of the fat-like substance in the one or more further inlets, such that the marbling in the stream of the food product provided at the outlet of the conduit varies along a direction of the stream.

Production of animal-based food product substitutes in industrial settings typically involves a fixed and set amount of input materials, processing of the input materials in a predetermined process, and providing the product with consistent properties and in precise quantities. Consequently, separate slices of a food product produced in these settings often look, smell, taste and/or feel extremely similar. Although high degrees of uniformity are often desirable because of the consistency it provides, the present invention is based on the recognition that some variance is not only to be expected but also desirable, in particular when it comes to animal-based food products. Desirable variations between separate food products may typically be obtained by introducing these variations in the individual products piece by piece. However, in industrial settings this is not a viable solution. Consequently, a different solution is required to obtain this variability that can be applied in mass-production. The present invention therefore provides this different solution and reduces uniformity across products by introducing variability in the production process of the food products.

In particular, the invention proposes to control the flow rate of the fat-like substance fed into the conduit of the marbling device as compared to the flow rate of the food substance, in order to create a marbling in the food product that varies along the direction of the stream provided at the outlet of the conduit. In some embodiments, this may e.g. entail holding the flow rate of the food substance constant while adjusting the flow rate of the fat-like substance. In other embodiments this may e.g. entail holding the flow rate of fat-like substance through at least some of the further inlets constant while varying the other flow rates. The stream provided at the outlet may then be separated into separate slices, or otherwise defined pieces of the manufactured food product, which advantageously have varying amounts and shapes of marbling embedded in them. The uniformity across manufactured food products is hereby greatly reduced. The invention therefore enables continuous and mass-production of animal-based food product substitutes that more closely resemble real animal-based food products and therefore appear highly natural. This method may even be applied to real meat or other animal-based food products for adding additional marbling such as to enhance these products similarly. The term fat-like substance in the present document may refer to a fat substance including a fat material, or may alternatively refer to a material that is introduced to mimic the taste, texture, or flow properties of fats. The one or more further inlets through which the fat-like substance is introduced may have an opening leading into the conduit at various positions on the conduit, such that there are various regions in each slice created from the food product provided with marbling. The fat-like substance is fed into the stream of the food substance while the food substance is forced from the inlet of the marbling device, through the conduit and out of the outlet of the marbling device. In a preferred embodiment, the forcing may be done using a pump, but alternative ways of forcing the substances through the conduit may be envisioned that fit within the inventive concept. Various examples of ways of forcing the food substance and fat-like substance through the conduit may include mechanical extrusion, pressurized pumping, vacuum suction, or mechanically pushing the substances. The control or variation of the flow rate through the one or more further inlets may be continuous, gradually increasing or decreasing the flow rate, resulting in respectively a gradually larger or gradually smaller proportion of a cross-sectional area of the stream being marbled. The control or variation of the flow rate may however also be discrete, for example suddenly or abruptly switching on or off the flow rate through at least one of the one or more further inlets, resulting in a correspondingly abrupt change in the marbling yielded at the outlet of the conduit. In some embodiments, the control of the flow rate may be well predefined, yielding a predictable yet varying marbling in the food product. But in alternative embodiments, the flow rate may be varied randomly within predefined upper and lower boundaries, yielding a marbling that varies in an unpredictable manner.

The food substance may for example be a structured food substance including a structured protein material, or alternatively may e.g. be chocolate or any other food substance that is to be provided with or which typically contains marbling. A structured food substance including a structured protein material is understood in this specification as being a food substance that comprises at least a protein material which may have previously undergone processing for the manufacturing of the food product. For example, in the production of animal-based food product substitutes, such processing may include heating a food substance including a plant-based protein material and rearranging the protein molecules, for example by subjecting the protein materials to shear stresses. Plant-based protein molecules typically have a more globular form, while protein molecules in animal-based food products typically have a more fibrous and aligned form; heat in that case helps unfold the protein molecules and makes them receptive to shear stresses for aligning the unfolded protein molecules in order to mimic protein molecules of animal-based food products. The food substance provided to the inlet of the marbling device may therefore still be in a heated state, and as a consequence the protein molecules may still be receptive to being rearranged. In a more heated state, the food substance may also more easily be mixed with the fat-like substance in such a way that a single stream is provided at the outlet of the conduit, rather than multiple separate streams. The food substance including the structured protein material in other words typically has protein molecules that are oriented in a substantially linear and aligned manner, thereby mimicking the properties of animal-based protein molecules.

In accordance with some embodiments of the invention, the method further comprises controlling a temperature of the food substance during forcing of the food substance through the conduit. For example, once the food substance and the fat-like substance have been mixed, cooling of the resulting food product may be necessary. This is particularly advantageous in embodiments where the food substance is a structured food substance including a structured protein material. In those embodiments, cooling of the food substance serves to fix the alignment of the protein materials included therein and thus results in the food product provided at the outlet of the marbling device. The method may therefore involve cooling of the food substance during pushing of the food substance through the conduit. In other embodiments, the temperature may be too low and the temperature may instead have to be increased. Furthermore, the method may advantageously involve maintaining a desired temperature of the food substance while it is being forced through the conduit.

In accordance with some embodiments of the invention, the controlling of the flow rate comprises adjusting the flow rate of the fat-like substance in at least some of the one or more further inlets. This adjustment may be performed dynamically while the food substance is forced through the conduit. These embodiments thus enable to provide a food product with dynamically varying marbling along the length of the stream of the food product. The flow rate may be adjusted to any level between a predefined maximum flow rate and a predefined minimum flow rate. The predefined minimum flow rate in some embodiments may be equal to zero - which would mean that the respective further inlet would be switched off - but in other embodiments the flow rate through at least some of the further inlets may be adjusted down to a level above zero during execution of the method according to embodiments of the invention. Moreover, the predefined maximum flow rate in some embodiments may be set by limitations associated with the dimensions of the further inlets, by the source of the fat-like substance, or by the means by which the fat-like substance is provided to the further inlets. In other embodiments however, the predefined maximum flow rate may be a level below such values as are imposed by such limitations. In other words, the method in some embodiments may involve selecting the predefined minimum and the predefined maximum, such as to yield a desired degree of marbling in the food product. In these embodiments, the marbling still varies dynamically along the direction of the stream of food product provided at the outlet of the marbling device, and the overall amount or degree of marbling may be set according to the requirements of a specific food product.

In accordance with some embodiments of the invention, the controlling of the flow rate comprises switching of at least some of the one or more further inlets on or off. Any or all of the further inlets may be switched off during forcing of the food substance through the conduit, such that the fat-like substance is not fed into the stream of the food substance via those further inlets, or may be turned on, such that those further inlets start to feed the fat-like substance into the food substance. This enables the marbling in a region of the food product associated with those further inlets to only be present along a portion of a length of the stream of the food product and thereby allows for a high degree of variety between the marbling present in different food products.

In accordance with some embodiments of the invention, for providing the food substance to the inlet of the conduit of the marbling device, the method comprises receiving a plurality of streams of the food substance at the inlet, wherein at least one of: respective streams of the food substance are received from respective sources; and at least some of the plurality of streams of the food substance are received from a same source. During execution of the method, the marbling device may be connected to a number of sources for providing the food substance. Examples of such sources may include vats, reservoirs, or other devices. Other devices may be part of an arrangement for manufacturing the food product. For example, the other devices may serve to structure the protein molecules in the food substance, turning them from a randomly oriented, globular form into a more linear and aligned form. In the present embodiments of the invention, the marbling device may receive a plurality of separate streams of food substance. In some embodiments, each stream may originate from the same source, such as a device that provides a plurality of streams of food substance. In other embodiments, each stream of the food substance may originate from a separate source, such as a plurality of vats, reservoirs, other containers or any other source that is connected to the inlet of the marbling device in such a way as to each provide a single stream of food substance thereto. In yet further embodiments, a combination of these two options may occur, in which some of the plurality of streams originate from a single source, while other streams provided to the inlet of the marbling device originate from a different source. The plurality of separate streams of the food substance may be identical in their properties, including for example their volumetric flow rates, their textures or their chemical compositions. In those embodiments, an advantage is that streams of food product with larger thicknesses may be manufactured by combination of the separate streams. But in other embodiments the streams may differ in some or all of their properties. This enables the food product manufactured using the method in accordance with these embodiments of the invention to be tuned to a high degree of accuracy, such as to yield a food product with desired properties. Receiving of a plurality of streams of food substance thus improves the ability to manufacture a food product, in particular a animal-based food product substitute that very closely approximates specific animal-based food products.

In accordance with some embodiments of the invention, during forcing of the food substance through the conduit, the plurality of streams of the food substance are compressed into a single stream of the food substance. As the marbling device receives a plurality of streams during execution of the method, there might be gaps or spaces between the streams, possibly filled with air or other gases or fluids. These gaps are undesirable for the manufacturing of the food product, because they interfere with the shaping of the food substance and prevent the proper flow parameters inside of the conduit from being established. An undesired effect of these gaps may for example be the presence of pressure gradients; these may cause expansion of the food substance or may cause filling of the gaps by water or water vapor. The method in accordance with the present embodiments therefore involves compressing the plurality of streams into a single stream, forcing the streams to flow through a decreased cross-sectional area of the conduit. Air is thus forced away from the streams and gaps are forced to be closed in between the streams. The method according to these embodiments thus forms a single, cohesive stream of food substance. By combining separate streams of food substance in this manner, these embodiments enable manufacturing a stream of food product that comprises regions with different properties. For example, a steak substitute having tougher and less tough regions may be produced in this manner. These embodiments in other words enable manufacturing food products that more closely mimic the properties of natural or animal-based food products they aim to substitute.

In accordance with some embodiments of the invention, the method further comprises feeding at least one additional material into the stream of the food product, wherein the at least one additional material comprises one of a group comprising: food dyes, blends of herbs, blends of spices, starch, yeast, salt, sugar, enzymes, minerals, vitamins, fibers, fragrances, flavors, pigments, and oils. While some or all further inlets of the marbling device may be used to feed the fat-like substance into the stream of food substance for yielding the marbling, additional materials such as the ones mentioned may also be fed into the stream for achieving additional effects in the food product. Food dyes such as beetroot extracts, paprika extracts, or tomato lycopene may for example be used to provide the food product with a red color reminiscent of red meat. Blends of herbs or spices, salt, sugar and yeast may be used to enhance or create certain flavor profiles in the food product, while starch may be used to alter or tune the textural properties or toughness of the food product. The feeding of these additional materials may be controlled in a similar fashion as the fat-like substance in order to further expand the range of variation that may be achieved using the marbling device.

In accordance with some embodiments of the invention, at least one of: each of the one or more further inlets comprises an opening having a mutually different shape; and each further inlet comprises an opening having a controllably variable shape, wherein the method comprises controlling, during feeding of the fat-like substance into the one or more further inlets, the shapes of the openings of at least some of the further inlets. By feeding the fat-like substance into further inlets that have openings with mutually different shapes, the marbling may advantageously be provided to the food product with different shapings in the different regions thereof, yielding an additional degree of variation to the food product that is to be expected from natural or animal-based food products. Furthermore, the shapes of the openings of the one or more further inlets may be controllable, enabling the marbling in the food product to be varied even further. Such controllable variation may for example be implemented by partially closing the openings; the one or more further inlets may to this end for example be provided with a controllable valve or gate.

In accordance with some embodiments of the invention, at least one of: at least some of the further inlets extend inward in the conduit with respect to an interior wall of the conduit; and at least some of the further inlets are arranged at the inlet section of the marbling device. In the present embodiments, marbling may be provided to the food product from a point that is removed from the lateral edge of the food product. This enables to manufacture a food product that has marbling that is completely embedded in it, rather than or in addition to marbling that extends to the lateral edge thereof. This makes the food products manufactured in the method according to these embodiments appear less synthetic than food products that have marbling only at or near their edges. Moreover, these embodiments help add marbling deeper into food products with large thicknesses, as the fat-like substance in these embodiments does not have to travel from the outer edge inward and are instead fed into the stream from a more central point. In some of these embodiments furthermore, a stream of fat-like substance or of an additional or further material may be integrated into the stream of the food product along the full length of the stream. These embodiments in other words greatly improve the resemblance of manufactured food products to natural food products and greatly increase the flexibility with which the food products may be manufactured.

In accordance with some embodiments of the invention, prior to providing the food substance, the method comprises selecting the marbling device from a plurality of marbling devices, wherein each marbling device comprises a conduit including an outlet having an opening with a mutually differing cross-sectional shape for providing the stream of the food product at the outlet of the conduit with a corresponding cross-sectional shape. Depending on the type of food product being manufactured, an advantageous shape of the opening of the outlet of the conduit may differ substantially. For example, in the case of animal-based food product substitutes, a rib-eye typically has a very different shape than a tournedos, or than a hamburger, or a chicken filet, or a piece of salmon. Consequently, by selecting a marbling device for executing the method having a conduit with an outlet opening that most closely resembles, out of the plurality of marbling devices, the shape of the food product to be manufactured, the amount of excess food product that has to be removed and disposed of in a subsequent shaping step may thus be minimized. These embodiments therefore make the method more efficient in terms of material use, and thereby provide a more environmentally friendly method of manufacturing food products.

In accordance with a second aspect of the invention, there is provided herewith a marbling device for use in a method according to any of the preceding claims, the marbling device comprising an inlet at an inlet section for receiving a food substance, an outlet at an outlet section for providing a stream of a food product, and a conduit running between the inlet and the outlet, wherein the conduit further comprises one or more further inlets for receiving a fat-like substance for being combined with the food substance in the conduit, such as to yield a marbling in the stream of the food product, wherein the marbling device is arranged for enabling controlling of a flow rate of the fat-like substance received by the one or more further inlets, such that the marbling in the stream of the food product provided at the outlet of the conduit varies along a direction of the stream.

The marbling device according to the second aspect enables manufacturing of a food product in a method according to the first aspect. The marbling device to this end comprises a conduit with an inlet at an inlet section of the device and an outlet at an outlet section of the device. The inlet is configured for receiving a food substance which will flow through the conduit. The marbling device further comprises one or more further inlets for enabling the stream of food substance in the conduit to be augmented or fed with a fat-like substance for marbling of the food product provided at the outlet of the conduit. The marbling device is configured for enabling controlling of the flow rate of the fat-like substance through the one or more further inlets, such that the marbling of the food product provided at the outlet varies along the direction of the stream. The marbling device therefore enables the uniformity across food products manufactured using the device to be greatly reduced. The marbling device thus enables mass-production of animal-based food product substitutes that more closely resemble real animal-based food product and therefore appear highly natural.

In accordance with some embodiments of the invention, at least one of: the inlet of the conduit is arranged for receiving a plurality of respective streams of the food substance from a plurality of respective sources; and the inlet of the conduit is arranged for receiving a plurality of streams of the food substance from a same source. In order to receive multiple streams of the food substance, the marbling device according to some of the present embodiments may be connected to a number of sources for providing the food substance, such as vats, reservoirs, or other devices that may be part of an arrangement for manufacturing the food product. The marbling device may either be connected to a single source that can provide a plurality of streams of the food substance to the inlet of the conduit of the marbling device, or may be connected to multiple sources therefor. Each source may then again either provide a single stream of food substance, or multiple streams of food substance to the inlet of the conduit of the marbling device. This greatly increases the variation that may be achieved in the food product manufactured by the marbling device, because each stream of food substance provided to the marbling device may differ in some or all of its properties.

In accordance with some embodiments of the invention, the conduit is arranged for compressing the plurality of streams of the food substance into a single stream of the food substance. The conduit of the marbling device may for example have a diameter or width that decreases along at least a portion of the length thereof from the inlet to the outlet. When the marbling device then receives multiple streams of food substance, the streams are compressed into a single stream. Any gaps that may reside between the separate streams may thus be forced to be closed, and any gases that may reside between the separate streams are thereby forced outside of the combined, single and cohesive stream of the food substance. The marbling device in accordance with the present embodiments of the invention thus prevents certain undesired effects of such gaps, gasses or fluids being present between multiple streams of the food substance, including expansion of the food substance, or filling of the gaps by water or water vapor. The marbling device according to the present embodiments further enables production of food products that contain various regions with different properties. This both reduces even further the uniformity across food products, and increases the variation within food products that can be achieved.

In accordance with some embodiments of the invention, at least one of: each of the one or more further inlets comprises an opening having a controllably variable shape; and each of the one or more further inlets comprises an opening having a mutually differing shape, such that feeding of the fat-like substance into the one or more further inlets yields a mutually differing marbling pattern. The shapes of the openings of the one or more further inlets of the marbling device may for example be controllable by the presence of a closable valve or gate therein. Control of the further inlets' opening shape helps create variability in the marbling provided in the food product manufactured using the marbling device. Furthermore, the openings of different further inlets of the marbling device may be mutually different. This causes the marbling provided to the food product to have a different shape in each region where the respective further inlets are positioned on the conduit, advantageously enabling the food product to be varied to an even larger degree.

In accordance with some embodiments of the invention, at least one of: at least some of the further inlets extend inward in the conduit with respect to an interior wall of the conduit; and at least some of the further inlets are arranged at the inlet section of the marbling device. This enables marbling in the food product to be provided from a more central point inside the conduit of the marbling device, relative to its interior wall. Marbling in food products manufactured using these marbling devices may thus be completely embedded inside of the food product. This makes the food products appear more natural, or more reminiscent of the food products they are meant to mimic, than food products that have marbling only at or near their edges. Furthermore, in cases where the conduit is very wide, the marbling device according to these embodiments may help provide marbling throughout the food substance, potentially in areas across the full cross-section of the stream of food substance. This is because the fat-like substance in these embodiments does not have to travel from the outer edge inward and are instead fed into the stream from a more central point. In some of these embodiments furthermore, a stream of fat-like substance or of an additional or further material may be integrated into the stream of the food product along the full length of the stream. These embodiments in other words enable to greatly improve the resemblance of manufactured food products to natural food products and further greatly increase the flexibility with which the food products may be manufactured.

In accordance with some embodiments of the invention, a cross-sectional shape of the conduit is one of a group comprising: rounded rectangular shapes, trapezoidal shapes, oval shapes, circular shapes. Various shapes may be advantageous for various types of food products to be manufactured. For example, circular shapes may be particularly advantageous when the marbling device is used for manufacturing simple, hamburger-shaped products, as these are typically made to have a circular shape. Using a marbling device wherein the opening of the outlet of the conduit has a circular shape may then result in a cylindrical stream of the food product. This cylindrical stream may then be sliced into "burgers" with a circular shape. Other shapes may be more advantageous for other types of food products, as will be appreciated by the skilled person. For example, various trapezoidal shapes may be particularly suited for the manufacturing of steaks. The amount of excess material to be removed and disposed of from the food product provided at the outlet of the conduit may thus be minimized or even eliminated if the shape sufficiently resembles that of a steak.

In accordance with a third aspect of the invention, there is provided herewith an arrangement for manufacturing of a food product via a method according to the first aspect of the invention, wherein the arrangement comprises a marbling device according to the second aspect of the invention, the marbling device comprising an inlet at an inlet section for receiving a food substance, an outlet at an outlet section for providing a stream of the food product, and a conduit running between the inlet and the outlet, wherein the conduit further comprises one or more further inlets for receiving a fat-like substance for being combined with the food substance in the conduit, such as to yield a marbling in the stream of the food product, wherein the marbling device is arranged for enabling controlling of a flow rate of the fat-like substance received by the one or more further inlets, such that the marbling in the stream of the food product provided at the outlet of the conduit varies along a direction of the stream.

The method according to the first aspect of the invention may be advantageously applied in an arrangement according to the third aspect of the invention. When the marbling device according to the second aspect of the invention is part of an arrangement for the manufacturing of a food product, the food substance provided to the inlet of the conduit of the marbling device may have been previously processed in the arrangement as part of the manufacturing process. For example, the arrangement may include a further device configured for heating and/or applying shear stresses to plant-based protein materials in order to make the protein molecules therein more reminiscent of protein molecules in animal-based food products. The marbling device in the arrangement may then receive the food substance after previous processing and supply it with a fat-like substance through the one or more further inlets of the marbling device in order to yield a marbling in the food product. The flow rate of the fat-like substance through the one or more further inlets of the marbling device may then be varied in the arrangement, such that the marbling of the food product varies along the direction of the stream of the food product provided at the outlet of the marbling device in the arrangement.

### Brief description of the drawings

The invention will further be elucidated by description of some specific embodiments thereof, making reference to the attached drawings. The detailed description provides examples of possible implementations of the invention, but is not to be regarded as describing the only embodiments falling under the scope. The scope of the invention is defined in the claims, and the description is to be regarded as illustrative without being restrictive on the invention. In the drawings:
Figure 1 schematically illustrates a marbling device in accordance with an embodiment of the second aspect of the invention.
Figures 2A-2C schematically illustrate a cross-sectional view of an opening of an outlet of an embodiment of a marbling device. Figure 2D schematically illustrates a cross-sectional view of two slices of a manufactured food product.
Figure 2E schematically illustrates a cross-sectional view of an opening of an inlet of an alternative embodiment of a marbling device in accordance with the second aspect of the invention; and two slices of a manufactured food product.
Figures 3A and 3B schematically illustrate a food substance at two respective stages in the method according to the first aspect of the invention.
Figure 4 schematically illustrates an arrangement in accordance with an embodiment of the third aspect of the invention.

### Detailed description

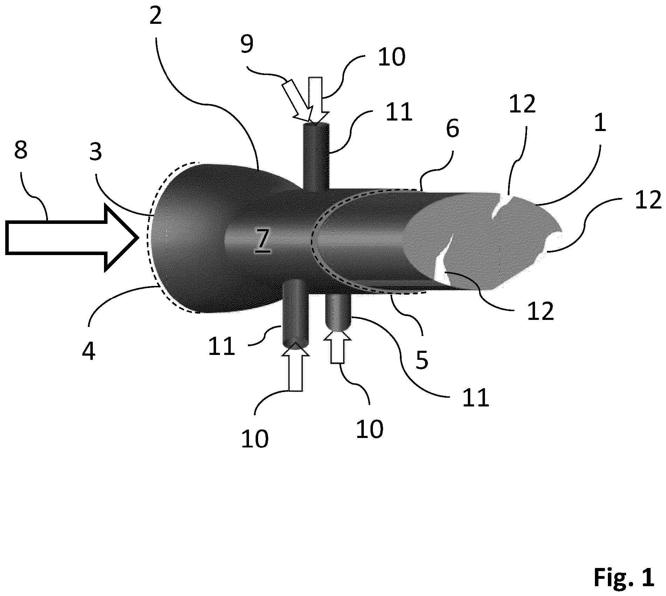

Figure 1 schematically illustrates how a food product 1 may be manufactured in the method according to the first aspect of the invention, using a marbling device 2. The marbling device 2 receives a food substance 8 at an inlet 3 of the marbling device 2, which is positioned at an inlet section 4 thereof. The food substance 8 may include a structured protein material. This may include protein molecules which may be substantially linearly aligned, in order to mimic protein molecules as they may appear in animal-based food products such as meat or fish. The method then involves forcing of the food substance 8 through the conduit 7. Forcing may for example be done by pumping, mechanical extrusion via pushing or vacuum suction from the outlet section. Forcing of the food substance 8 through the conduit 7 will result in a stream of the food product 1 being provided at the outlet 5 of the marbling device 2, which is positioned at an outlet section 6 thereof. The marbling device 2 is suitable for being provided continuously with the food substance 8 at the inlet 3, and continuous forcing thereof through the conduit 7 would result in a continuous stream of the food product 1 being provided at the outlet 5. During forcing of the food substance 8 through the conduit 7, a fat-like substance 10 is fed into the stream of the food substance 8 in the conduit 7. In this embodiment, three further inlets 11 are shown for feeding of the fat-like substance 10 into the conduit 7. However, in alternative embodiments any other number of further inlets 11 may be included on the marbling device 2 for this purpose. Furthermore, any of the further inlets 11 may additionally or alternatively be used feed additional materials 9 into the conduit. This may be done to otherwise enhance the properties of the food product 1 such as flavor profiles or textural properties. Additional materials 9 may for example include herbs, spices, dyes, starch, yeast, salt or sugar. The fat-like substance 10 being fed into the stream of the food substance 8 in the conduit 7 yields a marbling 12 in the stream of the food product 1 provided at the outlet 5. In this figure, marbling 12 can be seen in three regions in the food product 1: two regions at the bottom of the stream and another region at the top of the stream, in accordance with the positioning of the further inlets 11 on the conduit 7. The method further involves controlling the flow rate of the fat-like substance 10 through at least some of the further inlets 11, in order to yield a dynamic marbling 12 in the food product 1 - a marbling 12 that varies in size or shape along the flow direction of the stream of the food product 1 out of the outlet 5. Controlling of the flow rate may entail continuously or discretely adjusting the flow rate during the process of forcing the substances through the conduit 7, but it may additionally or alternatively entail switching the flow rate through at least some of the further inlets 11 on or off - that is, between non-zero and zero levels of flow. Each of these options may contribute to the marbling 12 in the food product 1 being made dynamic and non-uniform. The controlling of the flow rate may to this end also be performed differently for different food products 1. Moreover, while the food substance 8 and the fat-like substance 10 flow through the conduit 7, the substances may be cooled, for example using a cooling channel (not shown) arranged in thermal contact with the conduit 7 through which a cooling fluid is transported. If the protein molecules in the food substance 8 are provided to the inlet 3 in a heated state, cooling serves to fix the aligned orientation of the molecules. It further serves to solidify the fat-like substance 10 and results in the marbling 12 in the food product 1.

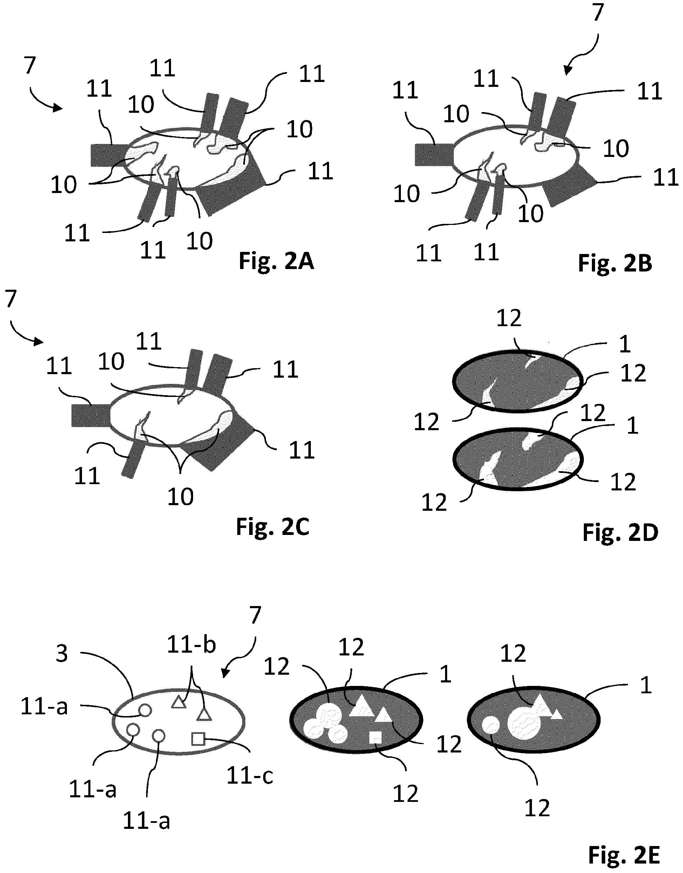

Figure 2A schematically illustrates a cross sectional view of an opening of an outlet 5 of a conduit 7. The conduit 7 is provided with six further inlets 11 for feeding a fat-like substance 10 into the conduit 7 while a food substance 8 is forced through the conduit 7. Each further inlet 11 has a different shape. Accordingly, the fat-like substance 10 fed through each respective further inlet 11 into the conduit 7 will also yield a marbling 12 with a different shape in the various regions of the stream of the food product 1. Furthermore, one of the further inlets 11 in this embodiment projects into the conduit 7 with respect to the interior wall thereof. This enables to yield marbling 12 in the food product 1 that is completely removed from the outer edge of the food product 1. This may alternatively be achieved using further inlets 11 which are arranged at the inlet section 4 of the marbling device 2, as will be further discussed in figure 2E. The method according to the first aspect of the invention comprises controlling the flow rate of the fat-like substance 10 through the further inlets 11. In use, one or more of the further inlets 11 may be kept switched off, so that a food product 1 manufactured using the marbling device 2 will not receive marbling in the region in which that or those respective further inlets 11 are positioned. Two alternative configurations of switched on and switched off further inlets 11 of the same marbling device 2 are shown in figures 2B and 2C. Figure 2D shows two slices of food product 1 manufactured using the marbling device 2, with the configuration of switched on and switched off further inlets 11 shown in figure 2C but at different flow rates of the fat-like substance 10 through the further inlets 11. As the food substance 8 is forced through the conduit 7 and supplied with the fat-like substance 10 through the further inlets 11, the method according to the first aspect of the invention comprises controlling the flow rate of the fat-like substance 10. This may involve adjusting the flow rate between two levels of flow, including a maximum level and a minimum level. The minimum level may be zero, meaning that the further inlet is switched off or kept switched off. But the minimum level may alternatively be defined as a non-zero level of flow chosen according to the requirements of the specific use. Similarly, the maximum flow rate may be determined by physical constraints such as the size of the further inlet 11 or the capacity of the source of the fat-like substance 10. But the maximum flow rate may alternatively be intentionally set below those limits to achieve specific amounts of marbling 12.

Figure 2E schematically shows an opening of an inlet 3 of an alternative embodiment of a marbling device 2. The conduit 7 of this marbling device is provided with three circularly shaped further inlets 11-a, two triangular further inlets 11-b, and a square-shaped further inlet 11-c. Each of these further inlets 11 is arranged at the inlet section 4 of the marbling device, in order to yield marbling 12 in the food product 1 that is removed from the outer edge of the food product 1. Similarly to the previous embodiment, in this embodiment some or all of the further inlets 11 may be switched on or off during forcing of the food substance 8 through the conduit 7, and the flow rate of the fat-like substance 10 through each further inlet 11 may be adjusted to various levels in order to vary the amount of marbling 12 in different slices of food product 1, as shown in figure 2E.

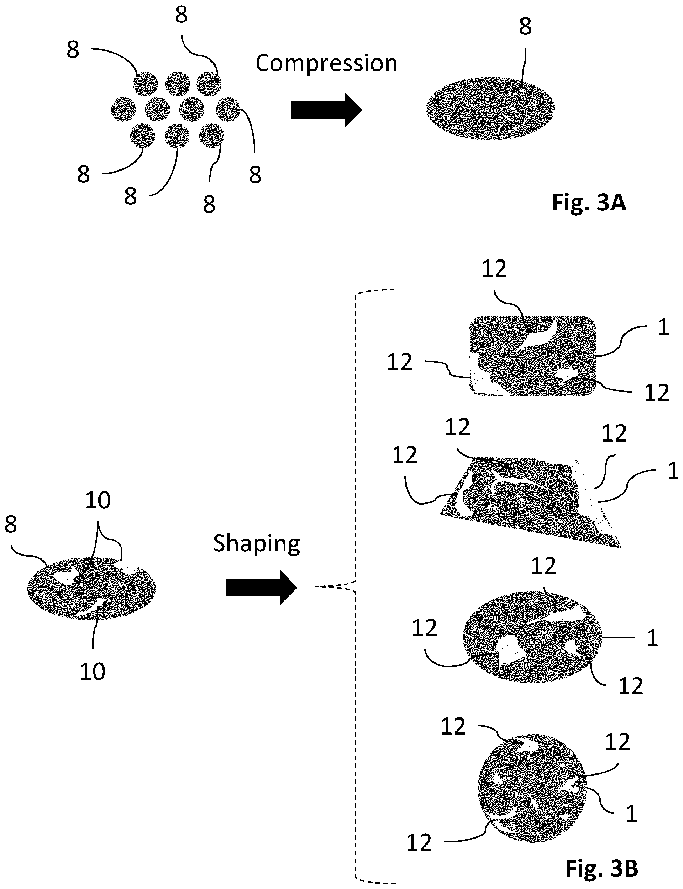

Figure 3A schematically illustrates a plurality of streams of food substance 8 to be provided to an inlet 3 of a marbling device 2. The plurality of streams may originate from a single source, or from a larger number of sources. When the plurality of streams is received in the marbling device 2, gaps between the respective streams may be present, which may for example be filled with air. In these embodiments, the marbling device 2 may be arranged to compress the various streams of food substance 8 into a single stream of food substance 8. This also removes the empty spaces and pockets of air that may have been present in the food substance 8 initially. Next, as the single stream of food substance 8 is forced through the conduit 7, and as a fat-like substance 10 is fed into the stream of food substance 8, the outlet 5 of the marbling device may be specifically shaped such as to provide the stream of the food product 1 in that shape. Therefore, prior to providing the food substance 8 to the inlet 3 of the marbling device 2, the marbling device 2 may first have been specifically selected out of a plurality of available marbling devices, each with a respective shape in the opening of its outlet 5. In figure 3B, various shapes of food products 1 that may be manufactured are shown. For example, the food product 1 may be provided having a rounded rectangular shape, a trapezoidal shape, an oval shape, or a circular shape. Various shapes in the openings of the outlets 5 may be advantageous for manufacturing different types of food product 1. For example, the circular shape may be advantageously selected when manufacturing hamburger-shaped (i.e., circular) products. By selecting a shape that more closely resembles the final shape of the food product 1 to be manufactured, the amount of excess food product 1 that has to be cut off and disposed of may be minimized. These embodiments thus provide a more environmentally friendly means of manufacturing the food product 1.

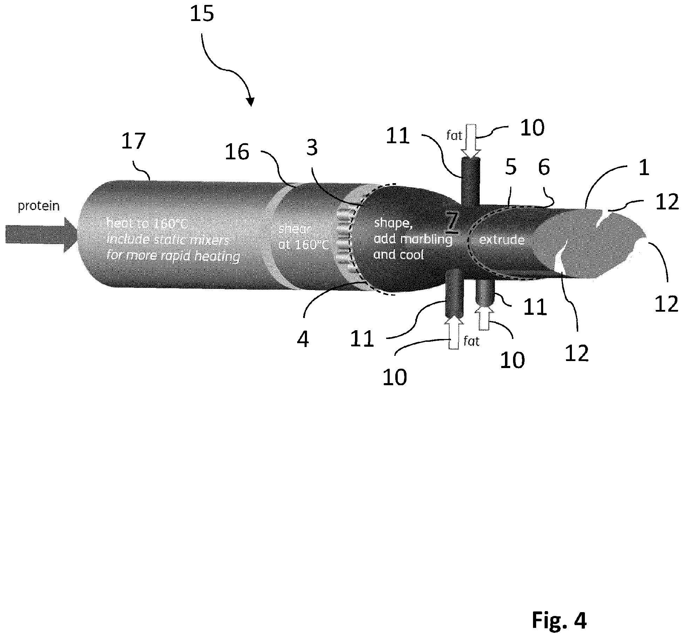

Figure 4 schematically illustrates an arrangement 15 in accordance with an embodiment of the third aspect of the invention. The arrangement 15 comprises a marbling device 2 according to the second aspect of the invention, and as such may be operated to execute the method according to the first aspect of the invention. In order to provide the food substance 8 to the inlet 3 of the marbling device 2 with protein molecules that are at least substantially linearly aligned, the inlet 3 of the marbling device 2 may be connected to a shear module 16. The shear module 16 may for example be configured for receiving an unstructured food substance including a protein material, in which the protein molecules are in a globular orientation, such as in plant-based protein molecules. Shear stresses in the shear molecules may then align the molecules, transforming the unstructured food substance into a structured food substance 8 including a structured protein material, in which the protein molecules are at least substantially linearly aligned. Furthermore, in order to make the protein molecules in the unstructured food substance receptive to the shear stresses in the shear module 16 for alignment of the molecules, the unstructured food substance has to be brought into a heated state. To this end, the arrangement may further include a heat source 17.

The present invention has been described in terms of some specific embodiments thereof. It will be appreciated that the embodiments shown in the drawings and described herein are intended for illustrated purposes only and are not by any manner or means intended to be restrictive on the invention. It is believed that the operation and construction of the present invention will be apparent from the foregoing description and drawings appended thereto. It will be clear to the skilled person that the invention is not limited to any embodiment herein described and that modifications are possible which should be considered within the scope of the appended claims. Also kinematic inversions are considered inherently disclosed and to be within the scope of the invention. Moreover, any of the components and elements of the various embodiments disclosed may be combined or may be incorporated in other embodiments where considered necessary, desired or preferred, without departing from the scope of the invention as defined in the claims.

In the claims, any reference signs shall not be construed as limiting the claim. The term 'comprising' and 'including' when used in this description or the appended claims should not be construed in an exclusive or exhaustive sense but rather in an inclusive sense. Thus the expression 'comprising' as used herein does not exclude the presence of other elements or steps in addition to those listed in any claim. Furthermore, the words 'a' and 'an' shall not be construed as limited to 'only one', but instead are used to mean at least one', and do not exclude a plurality. Features that are not specifically or explicitly described or claimed may be additionally included in the structure of the invention within its scope. Any of the claimed or disclosed devices or portions thereof may be combined together or separated into further portions unless specifically stated otherwise, without departing from the claimed invention. Expressions such as: "means for ..." should be read as: "component configured for ..." or "member constructed to ..." and should be construed to include equivalents for the structures disclosed. The use of expressions like: "critical", "preferred", "especially preferred" etc. is not intended to limit the invention. Additions, deletions, and modifications within the purview of the skilled person may generally be made without departing from the spirit and scope of the invention, as is determined by the claims. The invention may be practiced otherwise then as specifically described herein, and is only limited by the appended claims.

## Claims

1. Method of manufacturing a food product using a marbling device, wherein the marbling device comprises an inlet at an inlet section of the marbling device, an outlet at an outlet section of the marbling device, and a conduit running between the inlet and the outlet, the method comprising:
- providing a food substance to the inlet;
- forcing the food substance through the conduit, such as to provide a stream of the food product at an outlet of the conduit;
wherein during the forcing of the protein substance through the conduit, the method comprises feeding a fat-like substance into one or more further inlets of the conduit for being combined with the food substance for yielding a marbling in the stream of the food product,
wherein for feeding the fat-like substance into the one or more further inlets, the method comprises controlling a flow rate of the fat-like substance in the one or more further inlets, such that the marbling in the stream of the food product provided at the outlet of the conduit varies along a direction of the stream.

2. Method according to claim 1, wherein the method further comprises controlling a temperature of the food substance during forcing of the food substance through the conduit.

3. Method according to claim 1 or 2, wherein the controlling of the flow rate comprises adjusting the flow rate of the fat-like substance in at least some of the one or more further inlets.

4. Method according to any of the claims 1-3, wherein the controlling of the flow rate comprises switching of at least some of the one or more further inlets on or off.

5. Method according to any of the preceding claims, wherein for providing the food substance to the inlet of the conduit of the marbling device, the method comprises receiving a plurality of streams of the food substance at the inlet, wherein at least one of:
- respective streams of the food substance are received from respective sources; and
- at least some of the plurality of streams of the food substance are received from a same source.

6. Method according to claim 5, wherein during forcing of the food substance through the conduit, the plurality of streams of the food substance are compressed into a single stream of the food substance.

7. Method according to any of the preceding claims, wherein the method further comprises feeding at least one additional material into the stream of the food product, wherein the at least one additional material comprises one of a group comprising: food dyes, blends of herbs, blends of spices, starch, yeast, salt, sugar, enzymes, minerals, vitamins, fibers, fragrances, flavors, pigments, and oils.

8. Method according to any of the preceding claims, wherein at least one of:
- each of the one or more further inlets comprises an opening having a mutually different shape; and
- each further inlet comprises an opening having a controllably variable shape, wherein the method comprises controlling, during feeding of the fat-like substance into the one or more further inlets, the shapes of the openings of at least some of the further inlets; or
wherein at least one of:
- at least some of the further inlets extend inward in the conduit with respect to an interior wall of the conduit; and
- at least some of the further inlets are arranged at the inlet section of the marbling device.

9. Method according to any of the preceding claims, wherein prior to providing the food substance, the method comprises selecting the marbling device from a plurality of marbling devices, wherein each marbling device comprises a conduit including an outlet having an opening with a mutually differing cross-sectional shape for providing the stream of the food product at the outlet of the conduit with a corresponding cross-sectional shape.

10. Marbling device for use in a method according to any of the preceding claims, the marbling device comprising an inlet at an inlet section for receiving a food substance, an outlet at an outlet section for providing a stream of a food product, and a conduit running between the inlet and the outlet,
wherein the conduit further comprises one or more further inlets for receiving a fat-like substance for being combined with the food substance in the conduit, such as to yield a marbling in the stream of the food product,
wherein the marbling device is arranged for enabling controlling of a flow rate of the fat-like substance received by the one or more further inlets, such that the marbling in the stream of the food product provided at the outlet of the conduit varies along a direction of the stream.

11. Marbling device according to claim 10, wherein at least one of:
- the inlet of the conduit is arranged for receiving a plurality of respective streams of the food substance from a plurality of respective sources; and
- the inlet of the conduit is arranged for receiving a plurality of streams of the food substance from a same source.

12. Marbling device according to claim 11, wherein the conduit is arranged for compressing the plurality of streams of the food substance into a single stream of the food substance.

13. Marbling device according to any of the claims 10-12, wherein at least one of:
- each of the one or more further inlets comprises an opening having a controllably variable shape; and
- each of the one or more further inlets comprises an opening having a mutually differing shape, such that feeding of the fat-like substance into the one or more further inlets yields a mutually differing marbling pattern; or
wherein at least one of:
- at least some of the further inlets extend inward in the conduit with respect to an interior wall of the conduit; and
- at least some of the further inlets are arranged at the inlet section of the marbling device.

14. Marbling device according to any of the claims 10-13, wherein a cross-sectional shape of the conduit is one of a group comprising: rounded rectangular shapes, trapezoidal shapes, oval shapes, circular shapes.

15. Arrangement for manufacturing of a food product via a method according to any of the claims 1-9, wherein the arrangement comprises a marbling device according to any of the claims 10-14, the marbling device comprising an inlet at an inlet section for receiving a food substance, an outlet at an outlet section for providing a stream of the food product, and a conduit running between the inlet and the outlet,
wherein the conduit further comprises one or more further inlets for receiving a fat-like substance for being combined with the food substance in the conduit, such as to yield a marbling in the stream of the food product,
wherein the marbling device is arranged for enabling controlling of a flow rate of the fat-like substance received by the one or more further inlets, such that the marbling in the stream of the food product provided at the outlet of the conduit varies along a direction of the stream.
